Europäisches Patentamt

European Patent Office

Office européen des brevets

(19)

(11) Publication number: **0 078 666**
**B1**

(12) **EUROPEAN PATENT SPECIFICATION**

(45) Date of publication of patent specification: **01.10.86**

(51) Int. Cl.⁴: **F 16 G 15/02**

(21) Application number: **82305726.0**

(22) Date of filing: **28.10.82**

(54) Improvements in chain components.

(30) Priority: **02.11.81 GB 8132924**

(43) Date of publication of application:
**11.05.83 Bulletin 83/19**

(45) Publication of the grant of the patent:
**01.10.86 Bulletin 86/40**

(84) Designated Contracting States:
**AT DE FR GB**

(56) References cited:
**DE-A-2 353 911**
**DE-B-1 234 460**
**GB-A- 991 218**
**US-A-1 513 729**
**US-A-2 972 223**
**US-A-3 134 221**
**US-A-3 243 952**
**US-A-3 453 822**
**US-A-4 107 917**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DY10 2XQ (GB)**

(74) Representative: **Lewis, David Overington**
**c/o Babcock International plc Cleveland House**
**19 St. James's Square**
**London SW1Y 4LN (GB)**

Courier Press, Leamington Spa, England.

## Description

This invention relates to chain components and, more particularly, to a connector link for joining together lengths of chain.

US—A—1 513 729 discloses a connector link formed of two identical portions and retaining means, each of the said identical portions consisting of a semi-toroidal crown connecting parallel extending first and second legs of generally rectangular cross-section, the first leg being bifurcated to form parallel jaws and the second leg having dimensions corresponding to the dimension of the gap between the jaws of the first leg, the legs being penetrated by aligned apertures of elongate cross-section such that on placing the identical portions in mating engagement with the respective second leg of one identical portion positioned intermediate the jaws of the first leg of the other identical portion a retaining bar is positionable in the aligned apertures rigidly to connect together the identical portions.

By the present invention it is provided that the inner jaw of the parallel jaws has a greater thickness than the outer jaw.

Such an arrangement maximises the strength of the connector link whilst reducing the metal content to a minimum, thereby producing a very compact form of link.

The invention will now be described, by way of example, with reference to the accompanying drawings, in which:—

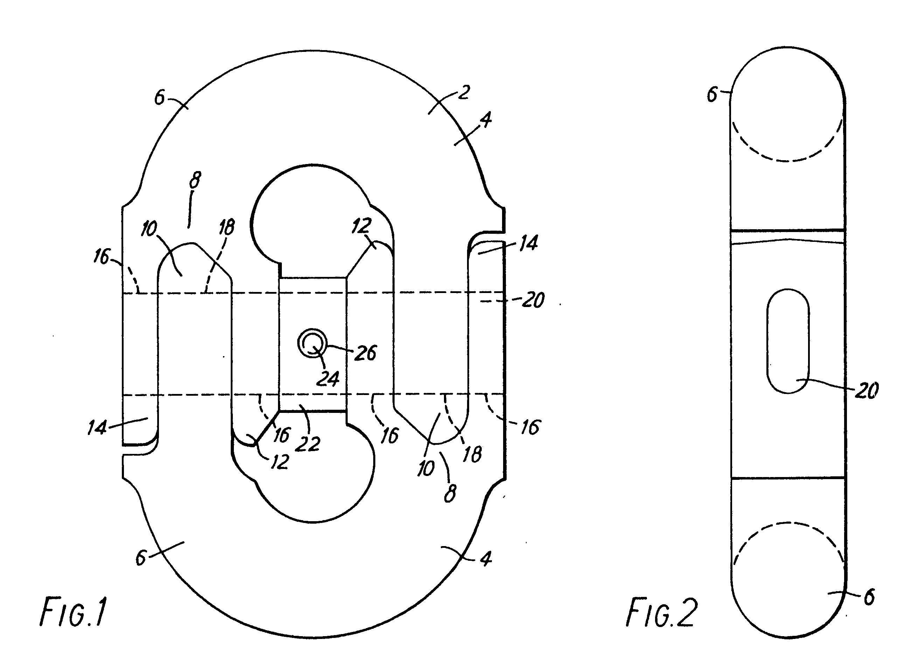

Figure 1 is a front elevation of a connector link; and

Figure 2 is a side elevation of the connector link.

As shown, the connector link 2 for joining together two lengths of chain (not shown) includes two identical portions 4. Each identical portion consists of a semi-toroidal crown 6 connecting parallel extending first and second legs 8, 10 of generally rectangular cross-section merging to the circular cross-section of the crown. The first leg 8 is bifurcated to form parallel jaws 12, 14, the inner jaw 12 having a greater thickness than the outer jaw 14 whilst the second leg 10 has dimensions corresponding to the dimensions of the gap between the jaws of the first leg.

The two identical portions 4 are assembled together with the jaws 12, 14 of the first leg 8 of each portion embracing the second leg 10 of the other portion. Aligned apertures 16, 18 of elongate cross-section with semi-circular ends are formed in the respective first and second legs and the identical portions are connected together by means of a closely fitting retaining bar 20 inserted into the aligned apertures. A collar 22 forms a sliding fit around the retaining bar and between the facing faces of the respective inner limbs of the jaws 12 of the first legs 8. A scroll pin 24 positioned in a bore 26 penetrating the collar and retaining bar serves to prevent relative movement between the collar and the retaining bar and, thus, when assembled, between the retaining bar and the first and second legs.

The radius of curvature and the cross-sectional radius of the crowns 6 of the connector conform to the corresponding dimensions of the chain links to be connected such that the link and the crown fit smoothly together. To effect connection between two lengths of chain, the connector is separated into the two identical portions, one of which is inserted into the end link of one length of chain and the other of which is inserted into the end link of the other length of chain. The two identical portions are then brought together, with the respective second legs positioned intermediate the jaws of the second legs, the retaining bar inserted into the aligned apertures with the collar positioned intermediate the inner limbs of the jaws and the scroll pin inserted to locate the collar on the retaining bar.

## Claims

1. A connector link (2) formed of two identical portions (4) and retaining means, each of the said identical portions consisting of a semi-toroidal crown (6) connecting parallel extending first and second legs (8, 10) of generally rectangular cross-section, the first leg (8) being bifurcated to form parallel jaws (12, 14) and the second leg (10) having dimensions corresponding to the dimension of the gap between the jaws of the first leg, the legs being penetrated by aligned apertures (16, 18) of elongate cross-section such that on placing the identical portions (4) in mating engagement with the respective second leg (10) of one identical portion positioned intermediate the jaws (12, 14) of the first leg (8) of the other identical portion a retaining bar (20) is positionable in the aligned apertures (16, 18) rigidly to connect together the identical portions characterised in that the inner jaw (12) of the parallel jaws (8) has a greater thickness than the outer jaw (14).

2. A connector link as claimed in Claim 1, characterised in that a transition portion between the inner jaw (12) of the parallel jaws (8) and the semi-toroidal crown (6) has a web thickness equal to or greater than the web thickness of the inner jaw (12) and an end portion of the second leg (10) is profiled to accommodate the web thickness of the transition portion.

3. A connector link as claimed in Claim 1 or Claim 2, characterised in that the gap between the facing faces of the inner jaws (12) of the assembled link approximates to the inner radius of curvature of the semi-toroidal crown.

## Patentansprüche

1. Verbindungsglied (2), das aus zwei identischen Teilen (4) und Halteeinrichtungen gebildet ist, wobei jeder dieser identischen Teile aus einer halbtoroidalen Krone (6) besteht, die zwei sich parallel erstreckende, erste und zweite Schenkel (8, 10) mit allgemein rechteckigem Querschnitt miteinander verbindet, wobei der erste Schenkel (8) gabelförmig ist und so parallele Backen (12, 14) bildet, und der zweite Schenkel (10) Abmessungen hat, die dem Zwischenraum der Backen des ersten Schenkels entsprechen, wobei die Schenkel von ausgerichteten Öffnungen (16, 18) mit länglichem Querschnitt durchbrochen werden, so daß, wenn man die identischen Teile (4) in eine ineinandergreifende Verbindung bringt, indem man den entsprechenden zweiten Schenkel (10) eines identischen Teiles zwischen die Backen (12, 14) des ersten Schenkel (8) des anderen identischen Teiles anordnet, ein Verbindungsstab (20) in die ausgerichteten Öffnungen (16, 18) starr eingebracht werden kann, um die identischen Teile miteinander zu verbinden, dadurch gekennzeichnet, daß die innere Backe (12) der parallelen Backen (8) dicker ist als die äußere Backe (14).

2. Verbindungsglied nach Anspruch 1, dadurch gekennzeichnet, daß der Übergangsteil zwischen der inneren Backe (12) der parallelen Backen (8) und der halbtoroidalen Krone (6) eine Stegstärke hat, die gleich oder größer als die Stegstärke der inneren Backe (12) ist, und ein Endteil des zweiten Schenkels (10) so ausgebildet ist, um die Stegstärke des Übergangsteiles aufzunehmen.

3. Verbindungsglied nach Anspruch 1 oder 2, dadurch gekennzeichnet, daß der Zwischenraum zwischen den gegenüberliegenden Flächen der inneren Backen (12) des zusammengesetzten Gliedes sich dem inneren Krümmungsradius der halbtoroidalen Krone annähert.

**Revendications**

1. Maillon de raccordement (2) formé de deux parties identiques (4) et de moyens de retenue, chacune des dites parties identiques étant composée d'une anse semi-toroïdale (6) reliant une première et une seconde branches parallèles (8, 10) à section de forme générale rectangulaire, la première branche (8) étant fourchue pour constituer des mâchoires parallèles (12, 14) et la seconde branche (10) ayant des dimensions correspondant à la dimension de l'interstice séparant les mâchoires de la première branche, les branches étant pénétrées par des trous alignés (16, 18) à section oblongue de sorte qu'en plaçant les parties identiques (4) en contact concordant avec disposition de la seconde branche (10) respective d'une des parties identiques entre les mâchoires (12, 14) de la première branche (8) de lautre partie identique on peut placer une barrette de retenue (20) dans les trous alignés (16, 18) pour relier rigidement les parties identiques l'une à l'autre, caractérisé en ce que la mâchoire intérieure (12) des mâchoires parallèles (8) a une plus grande épaisseur que la mâchoire extérieure (14).

2. Maillon de raccordement selon la revendication 1, caractérisé en ce qu'une partie de transition entre la mâchoire intérieure (12) des mâchoires parallèles (8) et l'anse semi-toroïdale (6) a une épaisseur d'âme égale ou supérieure à l'épaisseur d'âme de la mâchoire intérieure (12) et une partie terminale de la seconde branche (10) est profilée pour s'adapter à l'épaisseur d'âme de la partie de transition.

3. Maillon de raccordement selon la revendication 1 ou 2, caractérisé en ce que l'interstice entre les faces se regardant des mâchoires intérieures (12) du maillon assemblé est proche du rayon de courbure intérieur de l'anse semi-toroïdale.

FIG.1

FIG.2

0 078 666